# EUROPÄISCHE PATENTSCHRIFT

(11) **EP 0 738 535 B1**
(45) Veröffentlichungstag und Bekanntmachung des Hinweises auf die Patenterteilung: **19.01.2000**
(21) Anmeldenummer: 95117770.8
(22) Anmeldetag: 11.11.1995
(51) Int. Cl.: B01D 53/02

(54) **Adsorbierendes, biegsames Filterflächengebilde und Verfahren zu seiner Herstellung**
Adsorptive, flexible, flat sheet-like filter structure and process for making it
Structure de filtre à surface plane, adsorbant et flexible et procédé de fabrication

(30) Priorität: 22.04.1995 DE 19514887
(43) Veröffentlichungstag der Anmeldung: 23.10.1996
(73) Patentinhaber: Firma Carl Freudenberg, 69469 Weinheim (DE)
(72) Erfinder: Mühlfeld, Horst, D-64689 Grasellenbach (DE); Grimm, Hansjörg, D-69469 Weinheim (DE); Dabisch, Thomas, Dr., D-69509 Mörlenbach (DE); Stini, Harald, Dr., D-69488 Birkenau (DE)

(56) Entgegenhaltungen:
- EP-A- 0 714 696
- EP-B- 0 090 073
- DE-A- 3 304 349
- GB-A- 1 245 965

## Beschreibung

Die Erfindung betrifft ein adsorbierendes, biegsames Filterflächengebilde sowie ein Verfahren zu seiner Herstellung. Diese Filterflächengebilde werden als filternde Bestandteile von Lüftungs- und Klimaanlagen sowie, wegen ihrer Flexibilität, insbesondere auch in Schutzbekleidung gegen staubund gasförmige Gefahrenstoffe eingesetzt.

Die Patentschrift DE 33 04 349 C2 offenbart ein solches Flächenfilter, wobei auf dem textilen Trägermaterial ein Kleber in gleichmäßiger, punktförmiger Verteilung mittels einer Schablone als Muster von Kleberhäufchen in Form einer Halbkugel oder eines Kegels aufgedruckt worden ist. Darauf sind, ebenfalls in gleichmäßiger, punktförmiger Verteilung, Adsorber-Teilchen eines Durchmessers von 0,1 bis 1 mm fixiert. Das punktförmige Muster bedeckt 30 bis 70% der Trägermaterial-Oberfläche. Der Kleber ist ein lösungsmittelfreies Polyurethan. Die Menge des aufgetragenen Adsorbens wird mit 10 bis 200 g/m² angegeben.

Zur Herstellung werden 30 bis 70% der Oberfläche des Trägermaterials mittels einer Schablone mit einem punktförmigen Muster von Kleberhäufchen in Form einer Halbkugel oder eines Kegels bedeckt. Der Kleber ist ein Gemisch aus einem vorpolymerisierten, maskierten Isocyanat und einem Vernetzer. Die bedruckte Fläche wird mit Adsorber-Teilchen bestreut und der Kleber venetzt.

Nachteilig an diesem Filterflächengebilde ist, daß im Interesse einer ausreichenden Luftdurchlässigkeit die Adsorber-Partikeln nur auf den Oberflächen der Kleberhäufchen fixiert sind und dadurch eine Adsorber-Belegung über 200 g/m² ausgeschlossen ist. Es ist insbesondere nicht möglich, weitere Adsorber-Schichten vorzusehen. Damit ist auch die Menge der spontan adsorbierbaren Schadstoffe begrenzt.

Die Tatsache, daß sich die Adsorber-Partikeln gegenseitig nicht klebend verbinden können, sondern nur direkt mit den Kleber-Häufchen, schließt auch die Möglichkeit aus, die höhere Luftdurchlässigkeit bis zu 5000 µm großer Adsorber-Partikeln auszunutzen und gleichzeitig eine große, spontan wirksame Adsorber-Oberfläche anzubieten. Bei den vorgeschlagenen Dimensionen der Kleberhäufchen mit einer Höhe von 0,05 bis 0,5 mm und einem Durchmesser von 0,2 bis 1 mm steht für größere Mengen an Adsorber-Partikeln nicht genügend Bindemittel zur Verfügung.

Die vorliegende Erfindung hat zur Aufgabe, ein gattungsgemäßes Filterflächengebilde derart weiterzuentwickeln, daß Adsorber-Belegungen von deutlich über 200 g/m² gegeben sind und die Luftdurchlässigkeit dennoch so gut ist, daß es als Durchströmfilter in technischen Anlagen sowie als Bestandteil wasserdampfdurchlässiger Schutzbekleidung verwendet werden kann. Es soll möglich sein, die Adsorber-Belegung des textilen Trägermaterials so zu gestalten, daß die Partikeln auch übereinander fixiert sind. Ferner soll die Möglichkeit geboten werden, im Interesse hoher Luftdurchlässigkeit auch im Durchmesser bis zu 5000 µm große Adsorber-Teilchen in einer Vielzahl, auch übereinanderliegend und miteinander fixiert, vorzusehen, damit die spontan wirksame Adsorber-Oberfläche dennoch ausreichend bleibt. Bei alledem soll das Filterflächengebilde wahlweise so biegsam sein, daß es in Schutzbekleidung einsetzbar ist, oder eine gewisse Festigkeit aufweisen, damit es, z.B. in plissierter Form, als Faltenfilter in Luftreinigungssystemen jeglicher Art verwendet werden kann. Als Vorgabe soll dabei in jedem Fall ein Biegeradius von höchstens 5 mm zerstörungsfrei zu verwirklichen sein.

Die Lösung dieser Aufgabe besteht in einem adsorbierendem, biegsamen Filterflächengebilde mit den Kennzeichen des ersten Patentanspruchs sowie in einem Herstellungsverfahren, wie es im ersten Verfahrensanspruch dargelegt ist. Vorteilhafte Ausgestaltungen sind in den Unteransprüchen formuliert.

Das Filterflächengebilde weist in bekannter Weise ein luftdurchlässiges, biegsames, textiles Trägermaterial auf, welches auf einer seiner Oberflächen mit einem thermoplastischen Bindemittel fixierte Adsorber-Partikeln eines mittleren Durchmessers von 100 bis 5000 µm enthält. Die Summe folgender Kennzeichen führt zu dem erfindungsgemäßen Filterflächengebilde:
Die Adsorber-Partikeln sind auf ihrer Oberfläche mit voneinander beabstandeten Bindemittel-Partikeln belegt, deren mittlerer Durchmesser kleiner als derjenige der Adsorber-Partikeln ist. Die Adsorber-Partikeln sind auch untereinander durch Bindemittel-Partikeln verbunden. Die Belegung des Trägermaterials mit der adsorbierenden Komponente beträgt über 200 g/m². Das gesamte Flächengebilde weist eine Gesamtdicke von 0,5 bis 5 mm auf und läßt sich um einen Biegeradius von 5 mm noch zerstörungsfrei krümmen.

Als besonderer Schutz vor mechanischen Angriffen können die Adsorber-Partikeln mit einem textilen Abdeckmaterial auf der dem Trägermaterial abgewandten Seite versehen sein. Dieses Abdeckmaterial ist ebenso wie das Trägermaterial auf dem Adsorber mittels der auf ihm befindlichen Bindemittel-Partikeln thermisch fixierbar.

Sowohl die Adsorber- als auch die Bindemittel-Partikeln können jede beliebige reguläre oder irreguläre Gestalt besitzen. Die obengenannten Bedingungen für den Schmelzbereich der Adsorber-Partikeln sind so zu verstehen, daß, unabhängig von der Meßmethode, bei der tiefsten Temperatur, bei welcher das Bindemittel vollständig in schmelzflüssigem Zustand vorliegt, der Adsorber auf keinen Fall zu schmelzen beginnen darf.

Die mittlere Größe der Bindemittel-Partikeln kann 5 bis 90% desjenigen der Adsorber-Partikeln betragen und wird zweckmäßigerweise so gewählt, daß die geringstmögliche Menge an für die Filterleistung ineffektivem Bindemittel auf den Adsorber-Partikeln haftet und diese dennoch aneinander beständig fixierbar sind.

Das biegsame Filterflächengebilde ist im wesentlichen frei von Adsorber-Agglomeraten, die einzeln mit bloßem Auge sichtbar wären. Vielmehr liegt eine völlig irreguläre Verteilung von Adsorber- und Bindemittel-Partikeln vor.

Die Auswahl des zu verwendenden Bindemittels ist insofern einer Beschränkung unterworfen, als es unter 100°C auf der Adsorber-Oberfläche nicht spreiten und somit diese nicht vollständig okkupieren darf. Ferner ist darauf zu achten, daß die Flexibilität des Bindemittels im Fertigprodukt so groß ist, daß sie dessen Biegsamkeit nicht beeinträchtigt.

Als besonders vorteilhaft wegen der guten Adhäsion sowohl auf den Adsorber-Partikeln als auch auf dem textilen Träger- und gegebenenfalls Abdeck-Material, wegen der Hydrolysestabilität, der Flexibilität und des für das erfindungsgemäße Verfahren besonders geeigneten Schmelzverhaltens erweist sich ein thermoplastisches Polyurethan-Bindemittel mit einem Schmelzbereich von 130 bis 140°C, welches zwischen 130 und 180°C als hochviskose Schmelze vorliegt, die sich über diesen Temperaturbereich nur geringfügig in ihrer Viskosität verändert:
6,4 g/10 min bei 140°C und 2,16 kp Belastung,
15,4 g/10 min bei 160°C und 2,16 kp Belastung,
30,9 g/10 min bei 180°C und 2,16 kp Belastung
(Meßwerte jeweils nach DIN 53735).

Dieses Polyurethan-Bindemittel ist auf Basis von Polycaprolacton, Diphenylmethandiisocyanat und einer Kombination der Kettenverlängerer 1,4-Butandiol und 1,6-Hexandiol aufgebaut.

In den meisten Fällen wird Aktivkohle als Adsorber-Material der Vorzug gegeben werden wegen der breiten Anwendbarkeit, der Verfügbarkeit und der toxischen Unbedenklichkeit.

Das Filterflächengebilde kann, je nach Schwerpunkt der Anforderungen, in Lüftungs- und Klimaanlagen von Räumen jeglicher Art, auch in Fahrzeugen, eingesetzt werden, wo ein geringer Druckverlust von Bedeutung ist. Meist erhält man allein durch Variation der Steifigkeit des Träger- und gegebenenfalls des Abdeckmaterials ein biegsames, jedoch formstabiles, plissiertes, gerolltes oder gefaltetes Filterflächengebilde, welches ohne stützende Maßnahmen in den zur Verfügung stehenden Einbauraum eingesetzt werden kann. Solchermaßen geformte Filter bieten bei möglichst großer Filtermasse gleichzeitig eine hohe Luftdurchlässigkeit. Das ist besonders wichtig, wenn das Luftfilter Bestandteil einer Luftzufuhr-Vorrichtung für die Innenraumbelüftung und/oder Klimatisierung von Kraftfahrzeugen sein soll.

Die Erfindung bietet jedoch auch die vorteilhafte Möglichkeit, bei gleichen Adsorber-Mengen, allein durch die freie Auswahlmöglichkeit der textilen Bestandteile, die Flexibilität nicht nur gering (Lüftungsfilter), sondern auch hoch (Schutzbekleidung) vorzusehen.

Das Herstellungsverfahren beruht auf den folgenden Schritten: Bei Raumtemperatur werden 5 min lang 70 bis 95 Gew.-% Adsorber-Partikel regulärer oder irregulärer Gestalt mit einer mittleren Partikelgröße von 100 bis 5000 µm mit 30 bis 5 Gew.-% Bindemittel-Partikeln regulärer oder irregulärer Gestalt mit einer mittleren Partikelgröße von 90 bis 5% derjenigen der Adsorber-Partikeln vermischt. Dabei wählt man den Schmelzbereich der Bindemittel-Partikeln kleiner als denjenigen der Adsorber-Partikeln. Das Bindemittel ist thermoplastisch. Es darf unter 100°C auf der Adsorber-Oberfläche nicht spreiten und im festen Zustand keine zu große, die spätere Flexibilität des Flächengebildes beeinträchtigende Sprödigkeit aufweisen. Während des Mischens werden ferner 15 bis 70 Gew.-% Wasser, bezogen auf das Gesamtgemisch aus Adsorber, Bindemittel und Wasser, zugegegeben, wobei einer kleineren mittleren Größe der Adsorber-Partikeln der höhere Binderanteil zugeordnet ist.

Die Herstellung des Gemischs kann in jeder Vorrichtung erfolgen, welche eine homogene Mischung gewährleistet. Zweckmäßig wird ein Taumelmischer verwendet.

Die folgenden Verfahrensschritte laufen in sich kontinuierlich ab und gehen in ihrer Abfolge ineinander über:
Das Gemisch wird als lockere Schüttung auf ein textiles Trägermaterial aufgebracht, welches Temperaturen von mindestens 180°C zerstörungsfrei übersteht. Es wird für 20 bis 120 Sekunden auf mindestens 100°C und mindestens 5°C oberhalb des Schmelzbereichs des Bindemittels, jedoch unterhalb des Schmelzbeginnes des Adsorbers, erhitzt. Dies kann in einer Bandpresse oder einer Kalanderanlage erfolgen, in jedem Fall jedoch in einer offenen Vorrichtung.

Das bei Raumtemperatur dem Gemisch zugegebene Wasser belegt adsorptionsfähige Flächen der Adsorber-Partikeln und verhindert so deren übermäßige Belegung mit Schmelzkleber-Masse. Während des Erhitzens hält der entstandene Dampf die adsorptionsfähigen Poren der Adsorber-Partikeln offen. Er bildet zudem in der Filterschüttung makroskopische Hohlräume, welche im fertigen Filter einem geringen Druckverlust förderlich sind.

Ein weiterer Vorteil des Vorhandenseins von Wasserdampf während des Erhitzens besteht in seiner Eigenschaft, den Wärmeübergang von der Bandpresse durch das Schüttgut hindurch zu beschleunigen, weswegen das Verfahren besonders wirtschaftlich durchgeführt werden kann.

Allmählich entweicht der Wasserdampf vollständig, und das fertige, biegsame Filtermaterial kann als Bahnware zu einem Wickel aufgerollt werden.

Das entstandene Filterflächengebilde zeigt einen besonders homogenen Aufbau seiner adsorbierenden Komponente, ohne erkennbare Agglomerat-Strukturen. Adsorber- und Bindemittelpartikel sind völlig statistisch räumlich verteilt. Diese Verteilung erfolgt bereits im Gemisch durch den Wasserzusatz, weswegen das Eigengewicht der Schüttung beim Herstellungsverfahren des Filters keine Rolle spielt.

Wird eine Abdeckung der Adsorber-Partikeln gewünscht, so bringt man diese auf die dem Trägermaterial gegenüberliegende Adsorber-Fläche in-line vor dem Erhitzen auf. Selbstverständlich muß auch das Trägermaterial die Verfahrenstemperaturen zerstörungsfrei überstehen können. Seine Flexibilität kann entsprechend der gewünschten Biegsamkeit des fertigen Filters gewählt werden.

Oft enthalten Vorrichtungen zur Luftreinigung ein adsorbierendes und ein Partikelfilter-Medium, zum Beispiel aus Vliesstoff. Beide Filterarten sind dabei so hintereinander geschaltet, daß die Luft nacheinander beide Medien durchströmt. Auch hierfür ist das erfindungsgemäße Filterflächengebilde als adsorbierend wirkende Komponente einer solchen Vorrichtung geeignet: Sie kann, mit der beschriebenen Abdeckung über den Adsorber-Partikeln, mit einem Partikelfilter-Medium laminiert werden. Alternativ ist es möglich, unter Verzicht einer Abdeckung die Adsorberschicht-Seite direkt mit einem Partikelfilter-Medium, zum Beispiel einem Vliesstoff, zu laminieren.

Da Aktivkohle bekanntermaßen gegen Temperatureinflüsse, auch bei Anwesenheit von Wasserdampf, besonders widerstandsfähig ist, wird man dieses Adsorbens bevorzugt für das erfindungsgemäße Verfahren einsetzen.

Als besonders vorteilhaft für die Bedingungen des erfindungsgemäßen Verfahrens hat sich thermoplastisches Polyurethan mit einem Schmelzbereich von 130° bis 140°C erwiesen, wobei im Bereich bis 180°C eine hochviskose Schmelze vorliegt, deren Viskosität weitgehend temperaturunabhängig ist. Dieses Polyurethan ist aufgrund seines Weichsegmentaufbaus aus Polycaprolacton besonders geeignet, da es unter den Einsatzbedingungen des fertigen Filters gegen Wasserdampfhydrolyse stabil ist. Der niedrige Schmelzpunkt und die bereits erwähnte, nahezu konstante Schmelzviskosität über einen breiten Temperaturbereich werden erzielt durch den Hartsegementaufbau aus 1,4-Butandiol und 1,6-Hexandiol, kombiniert mit Diphenylmethandiisocyanat.

Das Verfahren ermöglicht auf besonders elegante und arbeitssparende Weise die gegebenenfalls gewünschte Zugabe von in Wasser dispergierbaren oder löslichen, die Sorption fördernden Substanzen oder auch von K₂CO₃ zur Chemisorption (Neutralisation) saurer Gase. Die Zusätze werden in der gewünschten Menge einfach vor der Gemischbildung dem dafür verwendeten Wasser zugesetzt. Infolge der gleichmäßigen Druck-, Temperatur- und Materialverteilung im Formhohlraum während des Verpressens ist gewährleistet, daß diese Hilfsmittel gleichmäßig die sorptiven Oberflächen belegen.

Neben der Möglichkeit, mindestens zwei Flächenfilter mit unterschiedlichen sorptionsfördernden und anderen Hilfssubstanz-Zuschlägen nach der Einzelfertigung miteinander zu kombinieren, besteht eine besonders vorteilhafte Verfahrensvariante darin, daß man die lockere Schüttung als Schichtung aus mindestens zwei Adsorber/Bindemittel-Phasen ausbildet, wobei man den einzelnen Phasen unterschiedliche Mengen sorptionsfördernder Hilfssubstanzen zumischt. Nach dem Verpressen entsteht ein im Querschnitt mehrschichtiger Flächenfilter mit in seinen Schichten verschiedenen Sorptionseigenschaften.

Als "Sorption" sollen hier alle Vorgänge bezeichnet werden, bei denen ein gasförmiger Stoff durch eine andere, mit ihm in Berührung kommende Festsubstanz selektiv durch Adsorption oder Chemisorption aufgenommen wird. Ohne die Erfindung auf die folgenden Substanzen zu limitieren, seien als Beispiele genannt: Aktivkohle und Knochenkohle, Kieselgel, Bleicherden, Kieselgel, aktiviertes Aluminiumoxid und aktivierter Bauxit sowie Calciumcarbonat.

Die bei gegebener Beladung mit Adsorbens in weiten Bereichen veränderbare Biegsamkeit des erfindungsgemäßen Filterflächengebildes macht dieses nicht nur für vorgeformte, gegebenenfalls plissierte, jedoch als Ganzes noch flexibel ausgestaltete Filter in Luftreinigungssystemen aller Art geeignet, sondern besonders auch zur Verwendung als Bestandteil von Schutzbekleidung, mit deren Oberstoffen es mühelos vernähbar ist. In Dicken von 0,5 bis 2 mm ist es wasserdampfdurchlässig genug für solche Anwendungen und enthält dennoch genügend zur Verfügung stehende, adsorbierende Oberflächen.

Im folgenden werden beispielhaft die Herstellung sowie die filter- und adsorptionstechnischen Eigenschaften eines Flächenfiltermaterials zum einen für die Klimaanlage eines Kraftfahrzeugs, zum anderen als Bestandteil eines Schutzbekleidungsstücks dargestellt.

### Beispiel 1

100,0 Gewichtsteile Aktivkohle in Granulatform mit einer Partikelgröße von 300 bis 800 µm und 18,0 Gewichtsteile thermoplatisches Polyurethanpulver mit einer Partikelgröße von 10 bis 350 µm, mit einem Schmelzbereich von 135 bis 140°C und mit Schmelzindexwerten bei 140°C von 6,4 g/10 min, bei 160°C von 15,4 g/10 min und bei 180°C von 30,9 g/10 min, jeweils gemessen nach DIN 53 753 und bei einer Belastung von 2,16 kp, und 80,0 Gewichtsteile Wasser werden in einem Taumelmischer 5 min bei Raumtemperatur gemischt.

Das Gemisch wird als lockere Schüttung in einer Auftragshöhe von 2 mm auf eine Polyester-Vliesstoffbahn mit einem Flächengewicht von 40 g/m² und einer Luftdurchlässigkeit von 3500 l/m². s bei 1 mbar, gemessen nach DIN 53 887, aufgebracht.

Zur Abdeckung wird eine zweite Polyester-Vliesstoffbahn mit einem Flächengewicht und einer Luftdurchlässigkeit wie bei dem Träger auf die Schüttung aufgelegt.

In einer Bandpresse mit einem Bandabstand von 2 mm wird die gelegte Bahnenware bei 180°C und einer Kontaktzeit von 2 min einem Temperprozeß unter geringem Druck ausgesetzt. In der anschließenden Entspannungszone kann der gebildete Wasserdampf vollständig austreten. Das Träger- und das Abdeckvlies sind fest auf der gesinterten Aktivkohle verankert. Die Bahnenware kann so zu einem Wickel aufgerollt werden.

An dem so hergestellten Flächenfilter mit einer Dicke von 2 mm und einer Aktivkohleauflage von 553 g/m² wird eine Luftdurchlässigkeit von 995 l/m². s bei 1 mbar nach DIN 53 887 gemessen. Die n-Butanadsorption (Integralmethode im Bereich von 0% bis 95%, in Anlehnung an DIN 71 460, Teil 2, Entwurf November 1994) beträgt 59 mg n-Butan bei einer Prüffläche von 36 cm².

Das Flächenfilter ist flexibel und plissierbar, besitzt aber dennoch eine ausreichende Steifigkeit, um in Faltenform in Lüftungsgeräte einbaubar zu sein. Seine Biegesteifigkeit beträgt 231,6 N mm² (Meßbedingungen: Biegewinkel = 30°, Biegeabstand = 10 mm).

### Beispiel 2

Die Aktivkohlemischung des Beispiels 1 wird gemäß dem dort beschriebenen Verfahren auf einem Träger mit einer Abdeckung aus einem Polyestergewirke (Flächengewicht 58 g/m², Luftdurchlässigkeit 6650 l/m², s bei 1 mbar) zu einem Flächenfilter mit 2 mm Dicke gesintert. Die Aktivkohleauflage beträgt 604 g/m².

An diesem Filter können eine Luftdurchlässigkeit von 1230 l/m². s, eine n-Butanadsorption von 71 mg (Prüffläche 36 cm²) und eine Biegesteifigkeit von 78,0 N mm² gemessen werden (Meßbedingungen in Beispiel 1).

Das Flächenfilter besitzt aufgrund dieser Daten einen textilen Charakter und ist daher als adsorbierender Bestandteil von Schutzbekleidung geeignet. Es kann mit entsprechenden Oberstoffen mittels üblicher Vorrichtungen vernäht werden.

## Patentansprüche

1. Adsorbierendes, biegsames Filterflächengebilde aus einem luftdurchlässigen, biegsamen, textilen Trägermaterial und aus darauf mit einem thermoplastischen Bindemittel fixierten Adsorber-Partikeln eines mittleren Durchmessers von 100 µm bis 5000 µm, wobei das Bindemittel aus Polyurethan mit einem Schmelzbereich von 130°C bis 140°C besteht und aus einem Weichsegmentanteil aus Polycaprolacton sowie aus einem Hartsegmentanteil aus 1,4-Butandiol und 1,6-Hexandiol mit Diphenylmethandiisocyanat aufgebaut ist, wobei die Adsorber-Partikeln auf ihrer Oberfläche mit voneinander beabstandeten Bindemittel-Partikeln belegt sind, der mittlere Durchmesser der Bindemittel-Partikeln kleiner als derjenige der Adsorber-Partikeln ist, die Adsorber-Partikeln auch untereinander durch Bindemittel-Partikeln verbunden sind, die Belegung des Trägermaterials mit Adsorber über 200 g/m² beträgt, sowie das Flächengebilde eine mittlere Gesamtdicke von 0,5 bis 5 mm aufweist und einen Biegeradius von höchstens 5 mm zerstörungsfrei zuläßt.

2. Filterflächengebilde nach Anspruch 1, dadurch gekennzeichnet, daß mit der dem Trägermaterial abgewandten Seite der Adsorber -Partikeln ein textiles Abdeckmaterial in gleicher Weise wie das Trägermaterial verbunden ist.

3. Filterflächengebilde nach einem der Ansprüche 1 und 2, dadurch gekennzeichnet, daß der Adsorber Aktivkohle ist.

4. Verfahren zur Herstellung des Filterflächengebildes nach einem der Ansprüche 1 bis 3, umfassend
a) das Mischen bei Raumtemperatur und für 5 min von 70 bis 95 Gew.-% Adsorber-Partikeln regulärer oder irregulärer Gestalt bei einer mittleren Partikelgröße von 100 bis 5000 µm mit 30 bis 5 Gew.-%-Bindemittel-Partikeln regulärer oder irregulärer Gestalt bei einer mittleren Partikelgröße von 90 bis 5 % derjenigen der Adsorber-Partikeln, wobei der Schmelzbereich der Bindemittel-Partikeln kleiner ist als derjenige der Adsorber-Partikeln, wobei man als Bindemittel thermoplastisches Polyurethan wählt, welches einen Schmelzbereich von 130°C bis 140°C aufweist, unter 100°C auf Adsorber-Oberfläche nicht spreitet, zwischen 130°C und 180°C als hochviskose Schmelze mit über den ganzen Temperaturbereich sich nur geringfügig verändernder Viskosität vorliegt und welches aufgebaut ist aus einem Weichsegmentanteil aus Polycaprolacton sowie aus einem Hartsegmentanteil aus 1,4-Butandiol und 1,6-Hexandiol mit Diphenylmethandiisocyanat, und Mischen mit 15 bis 70 Gew.-% Wasser, bezogen auf das Gesamtgemisch aus Adsorber, Bindemittel und Wasser, wobei einer kleineren mittleren Größe der Adsorber-Partikeln der höhere Binderanteil zugeordnet ist; und ferner umfassend die sich an dieses Mischen anschließende, ineinander übergehende Abfolge der kontinuierlichen Verfahrensschritte:
b) Aufstreuen des Gemisches als lockere Schüttung auf ein textiles Trägermaterial, welches Temperaturen von mindestens 180°C zerstörungsfrei übersteht,
c) Erhitzen des Gemisches auf dem Trägermaterial in einer offenen Vorrichtung für 20 bis 120 s auf mindestens 100°C und mindestens 5°C oberhalb des Schmelzbeginns des Bindemittels, jedoch unterhalb des Schmelzbeginns des Adsorbers, bei gleichzeitigem Austretenlassen des Wasserdampfs aus dem Gemisch,
d) Abkühlenlassen und Aufrollen des entstandenen biegsamen Filterflächengebildes.

5. Verfahren nach Anspruch 4, dadurch gekennzeichnet, daß man vor dem Erhitzen auf die dem Trägermaterial gegenüberliegende Adsorber-Fläche ein textiles Abdeckmaterial mindestens gleicher Wärmeresistenz wie diejenige des Trägermaterials legt.

6. Verfahren nach Anspruch 4 oder 5, gekennzeichnet durch die Verwendung von Aktivkohle-Adsorber-Partikeln.

7. Verfahren nach einem der Ansprüche 4 bis 6, dadurch gekennzeichnet, daß man dem Wasser vor dem Vermischen wasserlösliche oder -dispergierbare, sorptionsfördernde Hilfssubstanzen zugibt.

8. Verfahren nach Anspruch 7, dadurch gekennzeichnet, daß man mindestens zwei Filterflächengebilde nach deren Herstellung miteinander verbindet, welche jeweils verschiedene sorptionsfördernde Hilfssubstanzen enthalten.

9. Verfahren nach Anspruch 4 bis 6, dadurch gekennzeichnet, daß man die lockere Schüttung ausbildet als Schichtung aus mindestens zwei Adsorber/Bindemittel-Phasen, wobei man den einzelnen Phasen unterschiedliche Mengen sorptionsfördernder Substanzen beimischt.

10. Verwendung eines Filterflächengebildes nach einem oder mehreren der Ansprüche 1 bis 3 als filternden Bestandteil in Luftreinigungssystemen.

11. Verwendung eines Filterflächengebildes nach einem oder mehreren der Ansprüche 1 bis 3 als Bestandteil von Schutzbekleidung.

## Claims

1. An adsorbent, flexible flat filter material of an air-permeable, flexible, textile support material and, fixed thereon by a thermoplastic binder, adsorber particles of a mean diameter from 100 µm to 5000 µm, in which the binder comprises polyurethane having a melting range from 130°C to 140°C and is made up of a soft segment fraction of polycaprolactone and of a hard segment fraction of 1,4-butanediol and 1,6-hexanediol with diphenylmethane diisocyanate, in which the adsorber particles are coated on their surface by binder particles at a distance from one another, the mean diameter of the binder particles being less than that of the adsorber particles, the adsorber particles also being bound among one another by binder particles, the coating of the support material with adsorber being greater than 200 g/m², and the flat material having a mean total thickness of from 0.5 to 5 mm and permitting a bending radius of at most 5 mm non-destructively.

2. A flat filter material according to Claim 1, characterized in that a textile covering material is bonded in the same manner as the support material to the side of the adsorber particles facing away from the support material.

3. A flat filter material according to any one of Claims 1 and 2, characterized in that the adsorber is activated carbon.

4. A process for producing the flat filter material according to any one of Claims 1 to 3, comprising
a) mixing at room temperature and for 5 minutes from 70 to 95% by weight of adsorber particles of regular or irregular shape of a mean particle size of from 100 to 5000 µm with from 30 to 5% by weight of binder particles of regular or irregular shape of a mean particle size of from 90 to 5% of that of the absorber particles, the melting range of the binder particles being lower than that of the adsorber particles, thermoplastic polyurethane being selected as binder, which polyurethane has a melting range of from 130°C to 140°C, does not spread on the adsorber surface below 100°C, is present as a high-viscosity melt from 130°C to 180°C having a viscosity which changes only slightly over the entire temperature range and which is made up of a soft segment fraction of polycaprolactone and of a hard segment fraction of 1,4-butanediol and 1,6-hexanediol with diphenylmethane diisocyanate, and mixing with from 15 to 70% by weight of water, based on the total mixture of adsorber, binder and water, a smaller mean particle size being assigned to the adsorber particles of the higher binder fraction; and, in addition, comprising the sequence of the continuous process steps which follow this mixing and blend into one another;
b) scattering the mixture as a loose bed onto a textile support material which withstands temperatures of at least 180°C non-destructively,
c) heating the mixture on the support material in an open apparatus for from 20 to 120 s to at least 100°C and at least 5°C above the beginning of melting of the binder, but below the beginning of melting of the adsorber, simultaneously allowing the water vapour to escape from the mixture,
d) allowing the mixture to cool and winding up the resultant flexible flat filter material.

5. A process according to Claim 4, characterized in that in that, before the heating, a textile covering material of at least the same heat resistance as that of the support material is laid onto the adsorber surface opposite the support material.

6. A process as claimed in Claim 4 or 5, characterized by the use of activated-carbon adsorber particles.

7. A process as claimed in any of Claims 4 to 6, characterized in that water-soluble or water-dispersible, sorption-promoting auxiliary substances are added to the water prior to the mixing.

8. A process according to Claim 7, characterized in that at least two flat filter materials are bonded to one another after their production, each of which flat filter materials comprises varying sorption-promoting auxiliary substances.

9. A process according to any of Claims 4 to 6, characterized in that the loose bed is formed as a layering of at least two adsorber/binder phases, variable amounts of sorption-promoting substances being added to the individual phases.

10. The use of a flat filter material according to one or more of Claims 1 to 3 as a filtering component in air clean-up systems.

11. The use of a flat filter material according to one or more of Claims 1 to 3 as a component of protective clothing.

## Revendications

1. Structure de filtre à surface plane, adsorbant et flexible, constituée par un matériau support textile, perméable à l'air et flexible, et par des particules d'adsorbant fixées sur ce support à l'aide d'un agent liant thermoplastique, lesdites particules présentant un diamètre moyen compris entre 100 µm et 5000 µm, l'agent liant étant constitué par du polyuréthanne présentant une plage de fusion comprise entre 130 °C et 140 °C et par une proportion de segments mous de polycaprolactone, ainsi que par une proportion de segments durs en 1,4-butanediol et 1,6-hexanediol avec du méthanediisocyanate de diphényle, les particules d'adsorbant étant revêtues sur leur surface avec des particules d'agent liant éloignées les unes des autres, le diamètre moyen des particules d'agent liant étant inférieur à celui des particules d'adsorbant, les particules d'adsorbant étant également liées les unes aux autres par des particules d'agent liant, le revêtement du matériau support par l'adsorbant étant supérieur à 200 g/m² et la structure à surface plane présentant une épaisseur totale moyenne comprise entre 0,5 et 5 mm et acceptant un rayon de courbure de maximum 5 mm sans être abîmé.

2. Structure de filtre à surface plane selon la revendication 1, caractérisée en ce que le côté opposé au matériau support des particules d'adsorbant est relié par un matériau de recouvrement textile, de la même manière que le matériau support.

3. Structure de filtre à surface plane selon l'une quelconque des revendications 1 et 2, caractérisée en ce que l'adsorbant est du charbon actif.

4. Procédé pour la fabrication de la structure de filtre à surface plane selon l'une quelconque des revendications 1 à 3, comprenant
a) le mélange, à température ambiante et pendant 5 min, de 70 à 95 % en poids de particules d'adsorbant, de structure régulière ou irrégulière, présentant une grosseur moyenne des particules comprise entre 100 et 5000 µm, avec 30 à 5 % en poids de particules d'agent liant de structure régulière ou irrégulière, présentant une grosseur moyenne des particules comprise entre 90 et 5 % par rapport à celle des particules d'adsorbant, la plage de fusion des particules d'agent liant étant inférieure à celle des particules d'adsorbant, en choisissant comme agent liant du polyuréthanne thermoplastique, qui présente une plage de fusion comprise entre 130 °C et 140 °C, qui ne peut pas être étalé sur la surface d'adsorbant au-dessous de 100 °C, qui se présente, entre 130 °C et 180 °C, sous forme d'un bain de fusion à viscosité élevée dont la viscosité ne se modifie que faiblement sur toute la plage de température et qui est constitué par une proportion de segments mous en polycaprolactone, ainsi que par une proportion de segments durs en 1,4-butanediol et 1,6-hexanediol avec du méthanediisocyanate de diphényle, et le mélange avec 15 à 70 % en poids d'eau, par rapport au mélange total d'adsorbant, d'agent liant et d'eau, une grosseur moyenne plus petite des particules d'adsorbant étant associée à une proportion plus élevée d'agent liant, comprenant en outre la série d'étapes du procédé en continu successives et consécutives à ce mélange :
b) l'étalement du mélange sous forme de produit peu compact en vrac sur un matériau support textile, qui résiste à des températures d'au moins 180 °C sans être abîmé,
c) le chauffage du mélange sur le matériau support dans un dispositif ouvert pendant 20 à 120 s à au moins 100 °C et à au moins 5 ° au-dessus du début de la fusion de l'agent liant, mais toutefois au-dessous du début de la fusion de l'adsorbant, avec une évacuation simultanée de la vapeur d'eau du mélange,
d) le refroidissement et l'enroulement de la structure de filtre à surface plane flexible formée.

5. Procédé selon la revendication 4, caractérisé en ce qu'on place, avant le chauffage, sur la surface de l'adsorbant opposée au matériau support, un matériau de recouvrement textile présentant au moins la même résistance à la chaleur que le matériau support.

6. Procédé selon la revendication 4 ou 5, caractérisé par l'utilisation de particules d'adsorbant en charbon actif.

7. Procédé selon l'une quelconque des revendications 4 à 6, caractérisé en ce qu'on ajoute à l'eau avant le mélange des adjuvants solubles ou pouvant être dispersés dans l'eau, favorisant l'adsorption.

8. Procédé selon la revendication 7, caractérisé en ce qu'après leur fabrication, on relie l'une à l'autre au moins deux structures de filtre à surface plane, qui contiennent chacune des adjuvants différents favorisant l'adsorption.

9. Procédé selon la revendication 4 à 6, caractérisé en ce qu'on forme le produit peu compact en vrac sous forme de couches d'au moins deux phases d'adsorbant/agent liant, en ajoutant en mélangeant aux différentes phases des quantités différentes de substances favorisant l'adsorption.

10. Utilisation d'une structure de filtre à surface plane selon l'une ou plusieurs des revendications 1 à 3 comme composante filtrante dans des systèmes d'épuration de l'air.

11. Utilisation d'une structure de filtre à surface plane selon l'une ou plusieurs des revendications 1 à 3 comme composante de vêtements de protection.
